# NEUE EUROPÄISCHE PATENTSCHRIFT

(11) **EP 0 968 069 B2**
(45) Veröffentlichungstag und Bekanntmachung des Hinweises auf die Entscheidung über den Einspruch: **29.11.2006**
(45) Hinweis auf die Patenterteilung: 22.08.2001
(21) Anmeldenummer: 98924020.5
(22) Anmeldetag: 18.03.1998
(51) Int. Cl.: B23B 41/02

(54) **WERKZEUGMASCHINE**
MACHINE TOOL
MACHINE-OUTIL

(30) Priorität: 18.03.1997 DE 19711317; 20.01.1998 DE 1600004
(43) Veröffentlichungstag der Anmeldung: 05.01.2000
(73) Patentinhaber: Ex-Cell-O GmbH, 73054 Eislingen (DE)
(72) Erfinder: STRAUB, Hans, D-73337 Bad Überkingen (DE); HENZLER, Peter, D-73035 Göppingen (DE); BARTHOLD, Heinz, D-73084 Salach (DE)
(74) Vertreter: Hoeger, Stellrecht & Partner Patentanwälte
(86) Internationale Anmeldenummer: PCT/DE1998/000801
(87) Internationale Veröffentlichungsnummer: WO 1998/041350

(56) Entgegenhaltungen:
- EP-A- 0 556 493
- DE-A- 3 427 212
- DE-A- 3 737 746
- DE-C- 3 600 967
- Lieferung einer Hülle 2-Wege-Feindrehmaschine an Firma Stankoimport
- Dubbel "Taschenbuch für den Maschinenbau, 18 Auflage, Seite G 63

## Beschreibung

Die Erfindung betrifft eine Werkzeugmaschine zum Bearbeiten von Ausnehmungen, beispielsweise Bohrungen mit großer Axiallänge gemäß dem Oberbegriff des Patentanspruches 1 (siehe DE-C-36 00 967) und ein insbesondere für eine derartige Werkzeugmaschine geeignetes Werkzeug mit den Merkmalen des Oberbegriffs des Anspruchs 9 (siche DE-A-37 37 746).

Derartige Werkzeugmaschinen werden in der Serienfertigung von Gehäusebauelementen, beispielsweise von Kurbel-/Getriebegehäusen eingesetzt. Unter dem Begriff Werkzeugmaschine sind dabei die jeweils eingesetzten Bearbeitungsstationen, wie beispielsweise Transfereinheiten, Feinbohreinheiten, Sondermaschinen, Bohrwerke oder Bearbeitungszentren zu verstehen, über die die Bearbeitung der Gehäuse erfolgt. Ein wichtiges Einsatzgebiet derartiger Maschinen ist beispielsweise die Bearbeitung von Kurbelwellenlagerbohrungen einer Lagergasse zur Abstützung der Kurbelwelle oder entsprechend einer Nockenwelle. Derartige Lagergassen haben eine Vielzahl von im Abstand zueinander stehende Lagerbohrungsabschnitte, die durch Gehäusestege gebildet sind. Bei einem 4-Zylindermotor wird die Kurbelwelle üblicherweise fünffach gelagert, so daß fünf derartige Lagerbohrungsabschnitte koaxial hintereinanderliegend angeordnetsind. In Abhängigkeit von der Kurbelwellengröße erstrecken sich derartige Lagerbohrungen über eine erhebliche Axiallänge, so daß zum Ausbilden der Bohrung in fertigungstechnischer Hinsicht relativ hohe Anforderungen gestellt sind.

Üblicherweise werden zur Bearbeitung derartiger Lagerbohrungen sogenannte "Reihenbohreinrichtungen" (line bore system) verwendet, bei denen eine Bohrstange von einer Seite herin die Lagerbohrung eingeführt wird. Unter Lagerbohrung wird bei den folgenden Ausführungen die Vielzahl im Abstand zueinander stehender Bohrungsabschnitte verstanden. Die Bohrstange trägt eine Vielzahl von zueinander beabstandeten Werkzeugschneiden, wobei jede Werkzeugschneide einem der Lagerbohrungsabschnitte zugeordnet ist, so daß nach dem Einführen der Bohrstangen in die Lagerbohrung sämtliche Lagerbohrungsabschnitte mit einer Vorschubbewegung gleichzeitig bearbeitbar sind. Um radiale Auslenkungen zu vermeiden, wird der durch die Bohrungsabschnitte hindurchgeführte Endabschnitt der Bohrstange in einem Führungslager abgestützt, d. h., beide Endabschnitte der Bohrstange sind gelagert. Zur Bearbeitung der Bohrungsabschnitte werden die Bohrstange und die Führungslager zunächst gerichtet, das Gehäuse abgehoben, die gerichtete Bohrstange in die Bohrungsabschnitte eingefahren, das Gehäuse abgesetzt und gespannt. Nach der sich anschließenden Bearbeitung erfolgt ein weiteres Richten, das Gehäuse wird abgespannt und abgehoben und die Bohrstange ausgefahren. Dieses Werkzeug hat einen relativ komplexen Aufbau, da für jeden Bohrungsabschnitt zumindest eine Werkzeugschneide an der Bohrstange ausgebildet werden muß. Des weiteren ist eine Kompensation von Maßschwankungen nur schwierig möglich, da jeder Werkzeugschneide eine eigene Kompensationseinrichtung zugeordnet werden müßte.

Des weiteren sind auch Systeme bekannt, bei denen die Bohrstange lediglich an einem Endabschnitt eine Vorbearbeitungsschneide und eine Nachbearbeitungsschneide trägt, so daß die Lagerbohrungsabschnitte in Vorschubrichtung gesehen nacheinanderbearbeitet werden.

Beim Einsatz derartiger Werkzeuge und Werkzeugmaschinen hat sich gezeigt, bei langen Lagerbohrungen und der damit verbundenen Notwendigkeit, auch die Bohrstange mit einer entsprechenden Axiallänge auszuführen, während der Vorschubbewegung erhebliche Kräfte in Radialrichtung auf die Bohrstange wirken, die diese in Radialrichtung auslenken und somit bei der Bearbeitung berücksichtigt werden müssen. Eine Kompensation dieser Kräfte erfordert einen erheblichen fertigungstechnischen Aufwand, so daß die gewünschte Genauigkeit bei der Fertigung der Lagerbohrungen häufig nur schwierig oder nach einer Nachbearbeitung mit einem weiteren Werkzeug einzuhalten ist.

Demgegenüber liegt der Erfindung die Aufgabe zugrunde, eine Werkzeugmaschine und ein insbesondere für eine derartige Werkzeugmaschine geeignetes Bohrwerkzeug zu schaffen, bei denen mit minimalem vorrichtungstechnischen Aufwand eine hohe Maßhaltigkeit der herzustellenden Werkstücke gewährleistet ist.

Diese Aufgabe wird hinsichtlich der Werkzeugmaschine durch die Merkmale des Patentanspruches 1 und hinsichtlich des Werkzeuges durch die Merkmale des Patentanspruches 9 gelöst.

Durch die Maßnahme, die Bohrstange über einen Gegenhalter abzustützen, kann die Radialauslenkung der Bohrstange gegenüber einer frei auskragenden Bohrstange erheblich verringert werden. Durch die erhebliche Reduzierung der Radialauslenkung der Bohrstange und damit der an der Bohrstange gelagerten Werkzeugschneiden können beispielsweise die Lagerbohrungsabschnitte einer Lagergasse eines Kurbelgehäuses mit wesentlich höherer Genauigkeit bearbeitetwerden. Die Verbindung der Bohrstange mit dem Gegenhalter erfolgt erfindungsgemäß über eine geeignete Kupplung, die beispielsweise eine herkömmliche Spannvorrichtung für rotierende Werkzeuge sein kann. Alternativ dazu kann die Kopplung auch durch einen Gewindeeingriff der benachbarten Endabschnitte des Gegenhalters und der Bohrstange erfolgen.

Besonders vorteilhaft ist es, wenn der Gegenhalter von einer Spindel angetrieben wird, so daß die Drehzahl des Gegenhalters vor der Ankopplung an die Drehzahl der Bohrstange angepaßt werden kann. Der Gewindeeingriff kann beispielsweise durch Einstellung einer vorbestimmten Drehzahldifferenz erfolgen, während bei einer Kupplung über eine bekannte Spannvorrichtung der Gegenhalter und die Bohrstange synchron mit gleicher Drehzahl angetrieben werden.

Trotz der Abstützung über den Gegenhalter können während der Produktion dennoch Abweichungen von den gewünschten Sollwerten auftreten, die beispielsweise durch Schneidenverschleiß, Schneidentoleranz, Einstellfehler oder von durch Maßschwankungen aufgrund von Temperaturänderungen der Maschine verursacht sein können. Daher ist es besonders vorteilhaft, wenn das Schneidwerkzeug und die Werkzeugmaschine mit einem Zustellsystem aufgeführt werden, das eine Schneidenverstellung während der Zerspanung ermöglicht. Ein derartiges Zustellsystem ist beispielsweise in einer deutschen Voranmeldung (Amtszeichen P19712238) der Anmelderin detailliert beschrieben, auf die hiermit ausdrücklich Bezug genommen wird und deren Inhalt auch zur Offenbarung der vorliegenden Anmeldung zu zählen ist.

Eine Möglichkeit der Ausbildung eines derartigen Zustellsystems besteht darin, daß ein Schneidwerkzeug über einen Biegeklemmhalter an der Bohrstange befestigt wird und der Biegeklemmhalter mittels einer Betätigungswelle und einer daran ausgebildeten Steuerfläche in Radialrichtung auslenkbar ist, um die auftretenden Fehler zu kompensieren oder aber auch bestimmte Durchmesseränderungen der auszubildenden Bohrungen in Abhängigkeit von der Axiallänge der Bohrung auszuführen. Derartige Durchmesservariationen können beispielsweise bei konkaven, konvexen oder kegligen Bohrungen oder beim Einbringen von Einstichen etc. erforderlich sein.

Zum Einführen der Werkzeugschneiden in die Lagergasse müssen diese entweder zunächst über das Zustellsystem auf Untermaß gebracht werden oder aber die Relativlage zwischen der Lagergasse und dem Bohrwerkzeug (Bohrstange, Gegenhalter) muß derart verändert werden, daß ein Einführen ohne Kollision der Schneiden mit den Bohrungswandungen ermöglicht ist. Dies kann beispielsweise durch Anheben oder Absenken des Kurbelgehäuses geschehen, was allerdings nur mit einem erheblichen Aufwand möglich ist. Erfindungsgemäß wird dieser Nachteil dadurch ausgeräumt, daß das Bohrwerkzeug selbst in Radialrichtung verschiebbar in der Werkzeugmaschine aufgenommen ist.

Bei einer ersten Alternative wird dies dadurch erreicht, daß die Hauptspindel für die Bohrstange und die Spindel für den Gegenhalter von Exzenterspindeln getragen werden, so daß über diese die vorgenannte Radialverstellung auf Untermaß vornehmbar ist. In diesem Fall kann auch die Zustellbewegung durch entsprechende Ansteuerung der Exzenterspindeln erfolgen, so daß auf ein eigenes Zustellsystem verzichtet werden könnte. Selbstverständlich kann dies alternativ noch zusätzlich vorgesehen werden, um Produktionsfehler während der Zerspanung auszugleichen.

Alternativ zum Vorsehen von Exzenterspindeln kann die Hauptspindel und gegebenenfalls auch die Spindel für den Gegenhalter jeweils auf einer Vorschubeinheit mit Querschlitten gelagert werden, so daß zumindest die Bohrstange zum Einführen des Werkzeuges in die Lagergasse in Radialrichtung verschiebbar ist.

Eine besonders kurz bauende Werkzeugmaschine erhält man, wenn die Bohrstange (und ggfs. der Gegenhalter) mit Schneidwerkzeugen versehen wird, so daß die Axiallänge des Bohrwerkzeuges geringer als bei derjenigen Lösung ist, bei der die Bohrstange lediglich eine Werkzeugschnelde trägt.

Bei der vorgenannten Weiterbildung ist jedem Lagerbohrungsabschnitt eine Werkzeugsschneide zugeordnet, so daß die Lagerbohrungsabschnitte im wesentlichen gleichzeitig bearbeitet werden, während sie bei einem Bohrwerkzeug mit einer Schneide nacheinander folgend bearbeitet werden.

In dem Fall, in dem der Gegenhalter und die Bohrstange Werkzeugschneiden tragen, wird die Axiallänge dieser beiden Bauelemente etwa gleich ausgeführt, so daß die Kupplung etwa in der Mitte der Lagergasse angeordndet ist (in Axialrichtung gesehen).

Alternativ dazu können die Schneidwerkzeuge selbstverständlich auch alleine an der Bohrstange ausgebildet werden, so daß die Bohrstange die gesamte Lagergasse durchsetzt und der Gegenhalter nicht in die Bohrungsabschnitte eintaucht.

Selbstverständlich können auch andere Zustellsysteme, beispielsweise mit einem Zustellkopf oder sonstige bekannte Systeme mit mechanischer, hydraulischer, pneumatischer Verstellung eingesetzt werden.

Die Werkzeugmaschine wird vorteilhafterweise mit einer zentralen Steuereinheit ausgeführt, über die die Drehzahlen und Vorschübe der Spindel, des Gegenhalters und gegebenenfalls der Betätigungswelle und der diese Einrichtung tragenden Vorschubeinheiten aufeinander abstimmbar sind. Für die Regelung wird vorteilhafterweise eine digitale Antriebstechnik eingesetzt.

Sonstige vorteilhafte Weiterbildungen der Erfindung sind Gegenstand der weiteren Unteransprüche.

Im folgenden wird ein bevorzugtes Ausführungsbeispiel der Erfindung anhand schematischer Zeichnungen näher erläutert. Es zeigen:
Figur 1 ein erstes Ausführungsbeispiel einer erfindungsgemäßen Werkzeugmaschine, die als Transfereinheit ausgebildet ist,
Figur 2 eine Detaildarstellung eines Bohrwerkzeuges, das bei der Werkzeugmaschine aus Figur 1 einsetzbar ist,
Figur 3 ein zweites Ausführungsbeispiel einer Werkzeugmaschine, bei der das Bohrwerkzeug durch Exzenterspindeln getragen ist,
Figur 4 eine Schemadarstellung des Bohrwerkzeugs der Werkzeugmaschine aus Fig. 3,
Figur 5, ein drittes Ausführungsbeispiel einer Werekzeugrnaschine, bei der die Hauptspindel auf einem Querschlitten gelagert ist und
Figur 6 eine Schemadarstellung des Bohrwerkzeugs der Werkzeugmaschine aus Fig. 5.

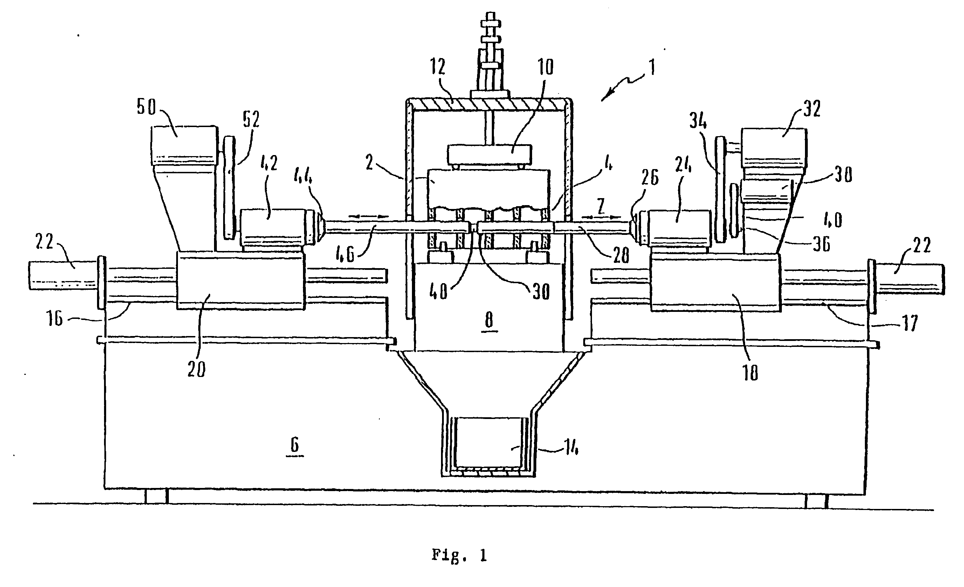

In Figur 1 ist eine Transfereinheit 1 einer Transferstraße dargestellt, entlang der ein Kurbelgehäuse 2 eines Verbrennungsmotors bearbeitet wird. Die Transferrichtung verläuft dabei senkrecht zur Zeichenebenen in Figur 1. Das Kurbelgehäuse 2 ist mit einer Lagergasse ausgeführt, die fünf Lagerbohrungsabschnitte hat, die an Stegen 4 des Kurbelgehäuses ausgebildet sind.

Die Transfereinheit hat ein Maschinenbett 6, auf dem ein Werkstückträger 8 gelagert ist. Dieser Werkstückträger 8 kann beispielsweise in Transferrichtung (senkrecht zur Zeichenebene) verfahrbar gestaltet sein, so daß das zu bearbeitende Werkstück - mithin das Kurbelgehäuse 2 - auf dem Werkstückträger 8 festgespannt bleibt. Alternativ dazu kann das Kurbelgehäuse 2 auch über geeignete Transporteinrichtungen zwischen den hintereinander angeordneten Transfereinheiten transportiert und dann auf einen auf dem Maschinenbett 6 montierten Werkstückträger 8 gespannt werden. Bei der in Figur 1 dargestellten Transfereinheit ist das Kurbelgehäuse 2 über eine Spannvorrichtung 10 auf dem Werkstückträger 8 festgelegt und von einer Abdeckhaube 12 umgeben, durch die Späne und Kühl/Schmiermittel während des Zerspanungsvorgangs zurückgehalten werden. Unterhalb des Werkstückträgers 8 (Ansicht nach Figur 1) ist ein Auffang- oder Speicherbehälter 14 für Späne und Kühl-/Schmiermittel vorgesehen. Bei der Spannvorrichtung 10 kann es sich um eine mechanisch, hydraulisch oder pneumatisch betätigte Einheit handeln.

Beidseitig des Werkstückträgers 8 sind am Maschinenbett 6 Führungen 16, 17 für eine Hauptspindel-Vorschubschlitten 18 bzw. für einen Gegenhalter-Vorschubschlitten 20 ausgebildet.

Der Antrieb der beiden Vorschubschlitten 18, 20 erfolgt über geeignete Elektromotoren 22, die beispielsweise als Drehstrommotoren mit Frequenzumformer (Drehstrom-Asynchronmotor) ausgebildet sein können. Auf dem Hauptspindel-Vorschubschlitten ist die Hauptspindel24 mit den entsprechenden Gehäuse- und Lagerelementen befestigt. An der Hauptspindel 24 ist über eine geeignete Werkzeugaufnahme 26 eine Bohrstange 28 befestigt, die an ihrem von der Werkzeugaufnahme 26 entfernten Endabschnitt ein Fertigbearbeitungswerkzeug, im folgenden Schneidwerkzeug 30 genannt, trägt. Die Länge der Führung 17 ist derart gewählt, daß die Bohrstange in Pfeilrichtung Z vollständig in die durch die Stege 4 gebildete Lagerbohrung eintauchbar oder aus dieser herausbewegbar ist. DerAntrieb der Hauptspindel 24 erfolgt über einen drehzahl- und lagegeregelten Spindelmotor 32, der über einen Zahnriementrieb 34 mit der Hauptspindel 24 verbunden ist. Der Spindelmotor 32 wird vorzugsweise als (AC) Servomotor ausgeführt.

In der Hauptspindel 24 ist eine in Figur 1 lediglich schematisch angedeutete Betätigungswelle 36 gelagert, die über einen Zustellmotor 38 und einen weiteren Zahnriementrieb 40 antreibbar ist.

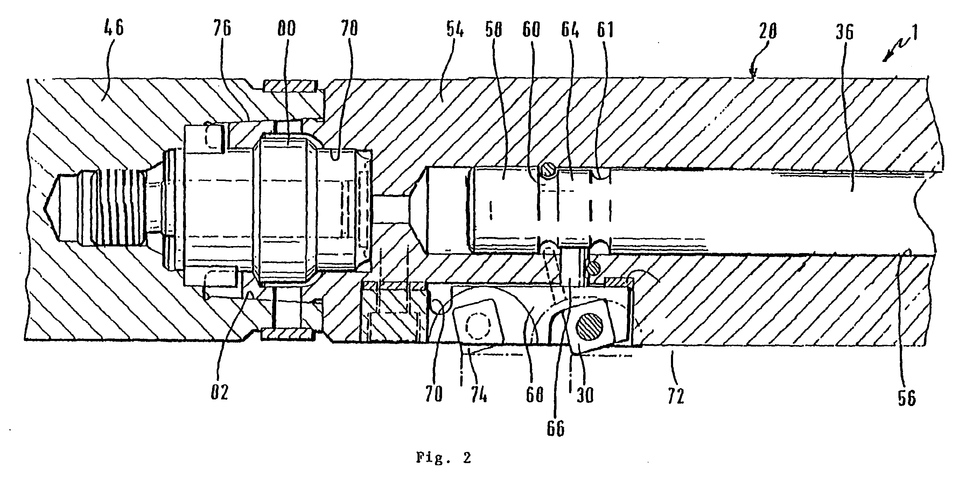

Über die Betätigungswelle 36 läßt sich das Schneidwerkzeug 30 in Radialrichtung auslenken. Hinsichtlich weiterer Details dieser Zustelleinrichtung sei auf die folgenden Ausführungen In Zusammenhang mit Figur2verwiesen. Sowohl der Spindelmotor 32 als auch der Zustellmotor 38 sind über geeignete Konsolen auf dem Hauptspindel-Vorschubschlitten 18 gelagert.

An dem diametral gegenüberliegenden Gegenhalter-Vorschubschlitten 18 ist eine Spindel 42 gelagert, die über eine Werkzeugaufnahme 44 mit einem Gegenhalter 46 verbunden ist, dessen Außendurchmesser so gewählt ist, daß er in die durch die Stege 4 gebildete Lagergasse eintauchen kann. Die Axiallänge des Gegenhalters 46 ist größer als die Axiallänge der Lagerbohrung gewählt, so daß der Gegenhalter 46 die gesamte Lagergasse durchsetzen kann.

Die Bohrstange 28 und der Gegenhalter 46 sind über eine geeignete Kupplung 48 biegesteif miteinander verbindbar.

Der Antrieb der Spindel 42 erfolgt über einen Spindelmotor 50, der über einen Zahnriementrieb 52 mit der Spindel 42 in Wirkverbindung steht. Der Spindelmotor 50 ist wiederum über eine Konsole auf dem Gegenhalter-Vorschubschlitten 20 befestigt.

Sämtliche Antriebsmotoren 22, 32, 38 und 50 sind über eine gemeinsame Steuereinheit ansteuerbar, so daß die jeweiligen Vorschubgeschwindigkeiten und Drehzahlen in der erforderlichen Weise aufeinander abstimmbar sind.

Bei der Übergabe des Kurbelgehäuses 2 an die in Figur 1 dargestellten Transfereinheit wird zunächst die Kupplung 48 gelöst und die beiden Spindelmotoren angesteuert, so daß der Hauptspindel-Vorschubschlitten 18 und der Gegenhalter-Vorschubschlitten 20 entlang den Führungen 17 bzw. 16 nach außen, d.h. von der Abdeckhaube 12 weg, bewegt werden. Durch diese Ausrückbewegung werden bei gelöster Kupplung 48 die Bohrstange 28 und der Gegenhalter 46 aus dem Kollisionsbereich mit dem Kurbelgehäuse 2 und gegebenenfalls mit der Abdeckhaube 12 bewegt, so daß das Kurbelgehäuse 2 in die Bearbeitungsposition bringbar ist. Anschließend werden die beiden Vorschubschlitten 18, 20 in Richtung auf das Kurbelgehäuse 2 zu bewegt, so daß die Bohrstange 28 und/oder der Gegenhalter 46 in die durch die Stege 4 gebildete Lagerbohrung eintauchen. Üblicherweise wird zunächst der Lagerbohrungsabschnitt in demjenigen Steg 4 ausgebildet, der am nächsten zur Hauptspindel 24 angeordnet ist (rechts in Figur 1). D.h., in diesem Fall befindet sich die Bohrstange 28 noch außerhalb der Lagerbohrung der Gegenhalter 46 und taucht vollständig in die Lagerbohrung 46 ein, bis sein Endabschnitt in eine Anlageposition mit der Bohrstange 28 gelangt. Je nach Kupplungsart werden dabei der Spindelmotor 32 und der Spindelmotor 50 mit gleicher oder mit einer vorgegebenen Drehzahldifferenz angetrieben, so daß die Kupplung 48 geschlossen und der Gegenhalter 46 und die Bohrstange 28 drehfest und biegesteif miteinander verbunden sind. Nach Einstellen der Bearbeitungsdrehzahl über eine entsprechende Ansteuerung des Spindelmotors 32 und des Spindelmotors 50 erfolgt dann die Bearbeitung der Lagerbohrung, wobei aufeinanderfolgend von rechts nach links die Lagerbohrungsabschnitte in den Stegen bearbeitet werden. Vorschub und Drehzahlen der Hauptspindel 24 und der Spindel 42 sind dabei in geeigneter Weise aufeinander abgestimmt. Während der Bearbeitung wird durch die Abstützung der Bohrstange 28 über den Gegenhalter 46 die Radialauslenkung des Schneidwerkzeuges 30 auf ein Minimum reduziert, so daß auch bei großen Bohrstangenlängen Fertigungsfehler aufgrund dieser Radialauslenkung auf ein Minimum reduziert sind.

Nach Bearbeiten der gesamten Lagerbohrung, d.h. nachdem das Schneidwerkzeug 30 den in Figur 1 am weitesten links angeordneten Steg bearbeitet hat, wird die Kupplung 48 gelöst und die Vorschubschlitten 18, 20 angesteuert, so daß der Gegenhalter 46 und die Bohrstange 28 aus der Lagerbohrung herausbewegt werden. Das Kurbelgehäuse 2 mit der auf Maß gebrachten Lagerbohrung kann dann zur nächsten Transfereinheit der Transferstraße bewegt werden.

Für die Kupplung 48 können beliebige Kupplungseinrichtungen eingesetzt werden. Wesentlich ist, daß die Kupplung hinreichend biegesteif ausgebildet ist, so daß der Gegenhalter 46 die Bohrstange 28 in der gewünschten Weise abstützen kann. Beispielsweise können handelsübliche Spannvorrichtung verwendet werden, um den Gegenhalter 46 mit der Bohrstange 28 zu verbinden. In diesem Fall werden die Hauptspindel 24 und die Spindel 42 während des Kupplungs-/Entkupplungsvorganges mitgleicherDrehzahl angetrieben. Vorstellbar ist auch, daß die Ankupplung über einen Gewindeeingriff zwischen dem Gegenhalter 46 und der Bohrstange 28 erfolgt. In diesem Fall wird der Gegenhalter 46 mit einervorbestimmten Drehzahldifferenz bezüglich der Bohrstange 28 betrieben, so daß der Gewindeeingriff hergestellt oder gelöst wird. Nach dem Erreichen der vorbestimmten Einschraubtiefe werden beide Spindeln mit gleicher Drehzahl betrieben.

Anhand von Figur 2 wird im folgenden ein Ausführungsbeispiel eines Werkzeuges dargestellt, das bei der Transfereinheit 1 in Figur 1 einsetzbar ist. Figur 2 zeigt eine Teildarstellung des bei der Transfereinheit 1 in Figur 1 verwendeten Bohr- oder Ausdrehwerkzeugs, wobei lediglich die im Kupplungsbereich angeordneten Teile dargestellt sind.

Demgemäß hat die Bohrstange 28 an ihrem frei austragenden Endabschnitt einen Endabschnitt 54. Die Axialbohrung 56 setzt sich auch im Endabschnitt 54 fort. In der Bohrstange 28 ist die Betätigungswelle 36 gelagert, die die Axialbohrung 56 durchsetzt. An dem in Figur 2 dargestellten Endabschnitt der Betätigungswelle 36 ist ein Steuerteil 58 ausgebildet.

Am Außenumfang des Steuerteiles 58 sind zwei Ringnuten 60, 61 ausgebildet, zwischen denen ein Nockenabschnitt mit einer Steuerfläche 64 ausgebildet ist. Die Steuerfläche 64 ist bei dem in Figur 2 dargestellten Ausführungsbeispiel- in Querschnittsrichtung gesehen - in Evolventenforrn gekrümmt.

An der Steuerfläche 64 liegt ein Stift 66 an, der in einer Radialbohrung des Endabschnittes 54 geführt ist. Die Axiallänge des Stiftes 66 ist größer als die Wandstärke des Endabschnittes 54 im Bereich der Radialbohrung gewählt; so daß die Endabschnitte des Stiftes 66 in die Axialbohrung 56 bzw. über den Außenumfang des Endabschnittes 54 hinaus vorstehen. An dem von der Steuerfläche 64 entfernten Endabschn itt des Stiftes 66 ist ein Biegeklemmhalter 68 abgestützt, der mittels einer Befestigungsschraube in einer Abflachung des Endabschnitts 54 befestigt ist. Der Biegeklemmhalter 68 hat eine die Federwirkung unterstützende Ausnehmung 70. Der federnde Endabschnitt des Biegeklemmhalters 68 kann In Anlage mit dem benachbarten Endabschnitt des Stiftes 66 gebracht werden, so daß letzterer durch den Biegekiemmhalter 68 gegen die Steuerfläche 64 vorgespannt ist. Das Schneidwerkzeug 30 - im vorliegenden Fall eine Wendeschneidplatte - ist im Bereich des Stiftes am Blegeklemmhalter 68 gelagert. Die Anschlagposition des Biegeklemmhalters 68 an den Endabschnitt 54 ist durch eine Anschlagplatte 72 bestimmt.

Durch Relativverdrehung der Betätigungswelle 36 mit Bezug zur Bohrstange 28 wird die Steuerfläche verdreht, so daß aufgrund der Evolventenform der Stift je nach Drehrichtung in Axialrichtung nach innen oder nach außen verschoben und entsprechend der Biegeklemmhalter 68 entsprechend In Radialrichtung ausgelenkt wird. Durch die Auslenkung des Biegeklemmhalters 68 kann das Schneidwerkzeug 30 in die gewünschte Zustellposition gebracht werden, die erforderlich ist, um einen während der Produktion auftretenden Fehler zu kompensieren oder den Durchmesser der Lagerbohrung in Abhängigkeit vom Vorschub zu variieren.

Demgemäß erfolgt eine Zustellbewegung, wenn die Bearbeitungswelle 36 mit einer Drehzahldifferenz mit Bezug zur Bohrstange 28 angetrieben wird. Sobald die Betätigungswelle 36 und die Bohrstange 28 mit gleichen Drehzahlen synchron angetrieben werden, erfolgt keine Axialverschiebung des Stiftes 66, so daß auch keine Zustellbewegung erfolgt. Hinsichtlich weiterer Details des in Figur 2 dargestellten Zustellsystems sei auf die eingangs erwähnte Patentanmeldung der Anmelderin verwiesen.

Wie in Figur 2 mit dünneren Linien angedeutet ist, kann der Werkzeugschneide 30 eine Vorbearbeitungswerkzeugschneide 74 zugeordnet werden, über die die auszubildende Lagerbohrung grob auf Maß bringbar ist. Um eine Unwucht des Bohrwerkzeuges zu verhindern, können mehrere Vorbearbeitungsschneiden am Umfang des Endabschnittes 54 verteilt werden. Diese Vorbearbeitungsschneiden 74 sind nicht in Zustellrichtung verschiebbar ausgeführt.

An dem in Figur 2 linken Endabschnitt des Endabschnites 54 ist ein Kupplungskonus 76 ausgebildet. Im Bereich dieses Kupplungskonus hat der Endabschnitt 54 eine Aufnahmebohrung 78, in die eine Kupplung 80, beispielsweise ein Vierpunktspannsatz, eintauchen kann, um den Kupplungskonus 76 gegen einen Innenkonus 82 des Gegenhalters 46 vorzuspannen.

Die Kupplung 80 ist mit einem Befestigungsabschnitt in eine Innenbohrung 78 des Gegenhalters 46 geschraubt.

In der Kupplungsposition liegen die konischen Anlageflächen des Gegenhalters 46 und des Endabschnittes 54 sowie die beiden Ringstirnflächen dieser beiden Bauelemente flächig aneinander an, so daß eine biegesteife und drehsichere Verbindung des Gegenhalters 46 mit der Bohrstange 28 gewährleistet ist.

Selbstverständlich können auch andere Kupplungsbauarten zur Verbindung des Gegenhalters 46 mit der Bohrstange 28 verwendet werden.

Bei der in Figur 2 dargestellten Variante werden zur Ankopplung des Gegenhalters 46 an die Bohrstange 28 beide Bauteile über die zugeordneten Antriebsmotoren (Figur 1) mit gleicher Drehzahl oder im Stillstand über dem Vorschubschlitten 18, 20 aufeinander zu bewegt, bis die Kupplung in Eingriff gelangt.

Bei der Ausführung der Kupplung mit einem Gewindeeingriff muß der Gegenhalter 46 mit einer Drehzahldifferenz mit Bezug zur Bohrstange 28 betrieben werden.

Durch die Abstützung der Bohrstange 28 mittels des angetriebenen Gegenhalters 46 kann die Biegestelfigkeit des Bohrwerkzeuges wesentlich erhöht werden, so daß die während des Zerspanungsprozesses auftretende Radialauslenkung der Bohrstange 28 im Bereich der Werkzeugschneiden (30, 74) auf ein Minimum reduziert ist. Die Lagerbohrungen des Kurbelgehäuses 4 lassen sich somit mit wesentlich höherer Genauigkeit ausbilden. Dennoch auftretende Fehler können über das in der Bohrstange 28 integrierte Zustellsystem kompensiert werden.

Bei dem vorbeschriebenen Ausführungsbeispiel eines Bohrwerkzeuges und einer Werkzeugmaschine ist die Bohrstange 28 lediglich mit einem Schneidwerkzeug 30 und einer Bohrbearbeitungsschneide 74 versehen, mit denen aufeinanderfolgend sämtliche Bohrungsabschnitte der Stege 4 bearbeitet werden.

Die Axiallängen der Bohrstange 28 und des Gegenhalters 46 müssen dabei jeweils etwas größer als die Gesamtaxiallänge der Lagergasse des Kurbelgehäuses 2 sein, so daß die Werkzeugschneide vom ersten Steg 4 des Kurbelgehäuses 2 zum in Bearbeitungsrichtung gesehen letzten Steg des Kurbelgehäuses verfahrbar ist. Dabei ist es prinzipiell möglich, beispielsweise in der Darstellung gemäß Fig. 1, die Stege 4 in der Folge von rechts nach links zu bearbeiten, so daß die Vorschubrichtung entsprechend von rechts nach links (Fig. 1) gewählt ist (drückende Version). Prinzipiell möglich ist es auch, das Schneidwerkzeug 30 der Bohrstange 28 zunächst mittels des Zustellsystems auf Untermaß einzustellen und die Bohrstange in die Lagergasse einzuführen, so daß das ganze Kurbelgehäuse 2 von der Bohrstange 28 durchsetzt wird. Anschließend wird die Bohrstange 28 mit dem Gegenhalter 46 gekoppelt und die Bearbeitung der Stege 4 erfolgt in der Darstellung nach Fig. 1 von links nach rechs (ziehende Bearbeitung).

Diese Vorgehensweise, mit vergleichsweise großen Vorschüben in Z-Richtung, die etwa der Axiallänge des Kurbelgehäuses 2 entsprechen, ist wirtschaftlich sinnvoll nur bei sehr hohen Schnittgeschwindigkeiten einsetzbar. Bei geringeren Schnittgeschwindigkeiten und bei Kurbelgehäusen mit sehr langen Axiallängen und vergleichsweise geringen Lagerbohrungsdurchmessern sind die im folgenden beschriebenen Ausführungsformen bevorzugt.

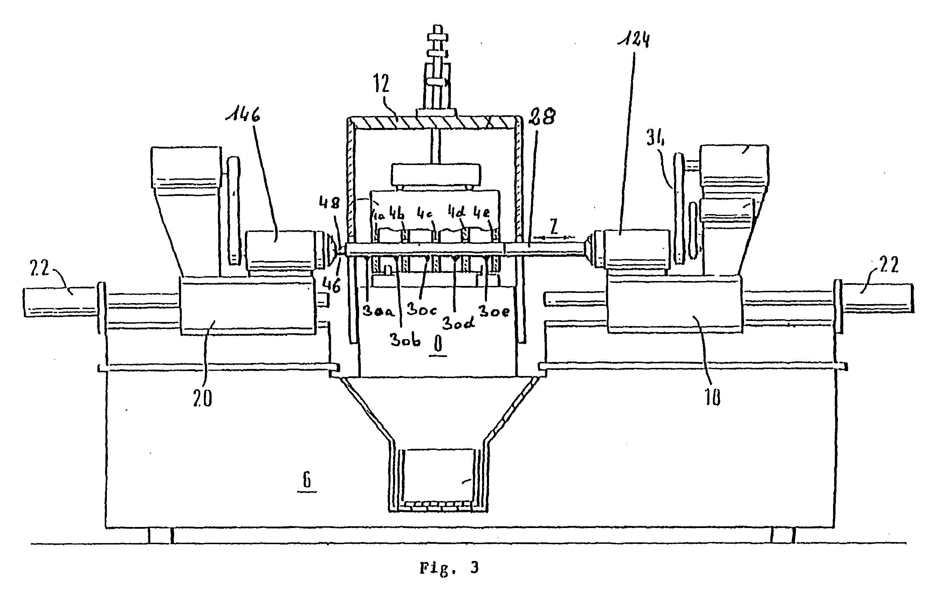

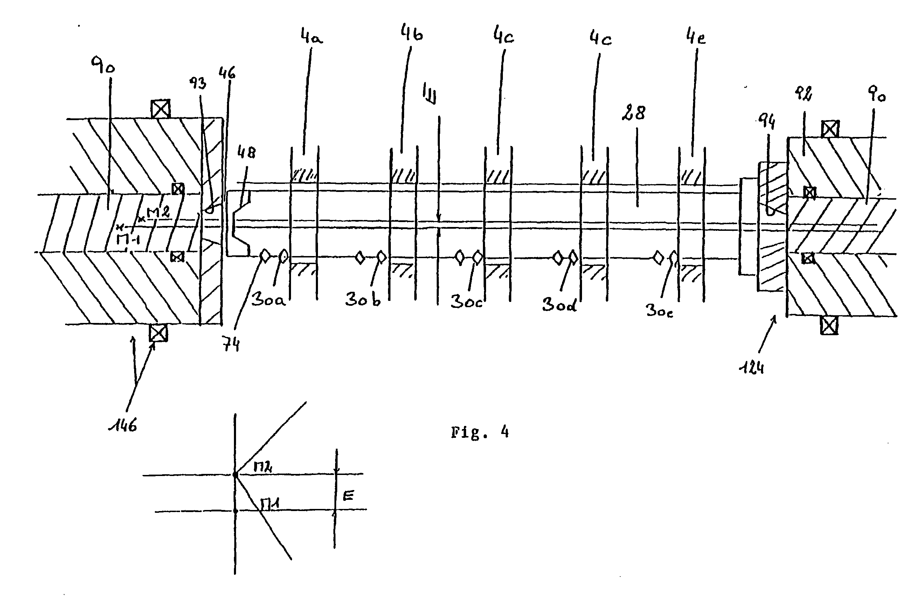

Bei dem anhand der Figuren 3 und 4 beschriebenen Ausführungsbeispiel trägt die Bohrstange 28 für jeden Steg 4a bis 4e ein eigenes Schneidwerkzeug 30a, denen jeweils wieder ein Vorbearbeitungswerkzeug mit einer Vorbearbeitungsschneide 74 zugeordnet sein kann. Die Axiallänge der Bohrstange 28 ist dabei etwas größer als die Axiallänge des Kurbelgehäuses 2 gewählt, so daß bei einem Eintauchen der Bohrstange 28 in der Darstellung nach Figur 3 von rechts das linke Schneidwerkzeug 30a in seine Bearbeitungspositionen mit Bezug zu dem zugeordneten Steg 4a bringbar ist. Der Gegenhalter 46 ist vergleichsweise sehr kurz ausgeführt und besteht im wesentlichen nur aus einer Aufnahme für die Kupplung 48.

Die sonstigen Bauelemente der Werkzeugmaschine, wie beispielsweise das Bett 6, der Hauptspindel- und Gegenhaltervorschubschlitten 18, 20, der Werkstückträger 8 und die Abdeckhaube 12 und die zugeordneten Antriebe 22 entsprechen im Aufbau im wesentlichen den entsprechenden Bauteilen der in Figur 1 dargestellten Werkzeugmaschine. Da bei dem vorbeschriebenen Ausführungsbeispiel der Bearbeitungsvorschübe während der Bearbeitung lediglich etwas größer als die Breite der Stege 4a bis 4e ist, kann die Führung für den Gegenhaltervorschubschlitten 20 etwas kürzer ausgeführt werden.

Die Gesamtbaulänge des Bohrwerkzeuges mit Gegenhalter 46 und Bohrstange 28 ist wesentlich kürzer als diejenige des vorbeschriebenen Ausführungsbeispiels, so daß ein biegesteiferes Bearbeitungswerkzeug erhalten wird.

Im Unterschied zu den vorbeschriebenen Ausführungsbeispielen werden die Bohrstange 28 und der Gegenhalter 46 nicht von herkömmlichen Spindeln getragen, sondern jeweils von einer Exzenterspindel 124 (Bohrstange 28) bzw. 146 Gegenhalter 46). Durch diese Exzenterspindeln 146, 124 können die Bohrstange 28 und der Gegenhalter 46 mit der Kupplung 48 in Radialrichtung, das heißt quer zur Längsachse der Lagergasse verschoben werden.

Figur 4 zeigt eine Schemadarstellung des Bohrwerkzeuges mit Gegenhalter 46, Kupplung 48 und Bohrstange 28.

Der Gegenhalter 46 und die Bohrstange 28 sind jeweils in einer schematisch angedeuteten Exzenterspindel 146 bzw. 124 festgespannt. Derartige Exzenterspindeln haben eine Innenspindel 90, die exzentrisch in einer Außenspindel 92 gelagert ist. Die Rotationsachse der Außenspindel ist in der Darstellung nach Figur 4 mit M1 bezeichnet. Die Rotationsachse der Innenspindel 90 trägt das Bezugszeichen M2. Der Radialabstand zwischen den beiden Achsen M1, M2 bestimmt die Exzentrizität E, die wiederum die radiale Stellung der Werkzeugschneiden des Fertigbearbeitungswerkzeugs 30 und des Vorbearbeitungswerkzeuges bestimmt. Das heißt, durch Relativverdrehung der Innenspindel 90 mit Bezug zur Außenspindel 92 läßt sich das Bohrwerkzeug in Radialrichtung verschieben. Der Aufbau derartiger Exzenterspindeln 124, 146 ist bereits aus dem Stand der Technik bekannt, so daß auf die vorhandene Fachliteratur verwiesen wird. Der Gegenhalter 46 und die Bohrstange 28 sind mittels geeigneter Spannkupplungen (z.B. HSK) 93, 94 in die Exzenterspindeln 24 bzw. 146 eingespannt.

Der Antrieb der Außen- und der Innenspindel 92, 90 erfolgt über geeignete Antriebseinrichtungen, beispielsweise Zahnriemen 34 und Zahnräder

Bei den in Figur 4 dargestellten Ausführungsbeispiel erfolgt die Zustellung der Schneidwerkzeuge 30, 74 und die Kompensation von Fertigungsschwankungen durch geeignete Ansteuerung der beiden Exzenterspindeln 124, 146, die synchron über eine gemeinsame Steuereinheit ansteuerbar sind. Prinzipiell läßt sich das Bohrwerkzeug jedoch auch mit einem Zustellsystem gemäß Figur 2 versehen, wobei dann die Bohrstange 28 durch eine Betätigungswelle 36 durchsetzt werde, der ein eigener Antrieb zugeordnet ist. Durch eine derartige Zustelleinrichtung ließen sich dann beispielsweise sämtliche Schneiden 30 zur Kompensation von Fertigungsschwankungen in Radialrichtung bewegen. Anstelle des vorbeschriebenen Zustellsystems mit Betätigungswelle 36 etc., können selbstverständlich auch andere Zustellsysteme, wie beispielsweise piezoelektrische Systeme und dergleichen eingesetzt werden, durch die unter Umständen jede Schneide 30a, 30b .... einzeln ansteuerbar wäre.

Zur Bearbeitung der Stege 4a, 4b ... wird die Bohrstange 28 zunächst über die Exzenterspindel 124 auf Untermaß gestellt und in der Darstellung nach Figur 4 von rechts in die Lagergasse eingeführt, bis das Schneidwerkzeug 30a und das Vorbearbeitungswerkzeug mit der Vorbearbeitungsschneide 74 vor dem letzten Steg (in Einführrichtung gesehen) 4a angeordnet sind. Gleichzeitig wurde der Gegenhalter 46 über die Exzenterspindel 146 auf das gleiche Untermaß E eingestellt, so daß die Bohrstange 28 und der Gegenhalter 46 über die Kupplung 48 verbunden werden können.

Anschließend wird das Bohrwerkzeug durch synchrone Ansteuerung der Exzenterspindeln 146, 124 auf das Bohr- oder Drehmaß eingestellt und die beiden Vorschubschlitten 18, 20 in Z-Richtung verschoben, bis die Bohrstange 28 die in Figur 4 dargestellte Position erreicht hat - die Stege 4a, 4b ... sind fertig bearbeitet. Prinzipiell lassen sich die Werkzeugschneiden auch während der Bearbeitung synchron verstellen.

Durch die vorbeschriebene Variante mit getrennt eingestellten Werkzeugschneiden ließen sich Fertigungstoleranzen an jedem einzelnen Steg unabhängig voneinander ausgleichen, so daß sich die Fertigungsqualität weiter verbessern läßt.

Im Anschluß an die Bearbeitung wird der Gegenhalter 46 von der Bohrstange 28 getrennt, diese über die Exzenterspindel 124 auf Untermaß eingestellt und dann kollisionsfrei aus dem Kurbelgehäuse herausgezogen.

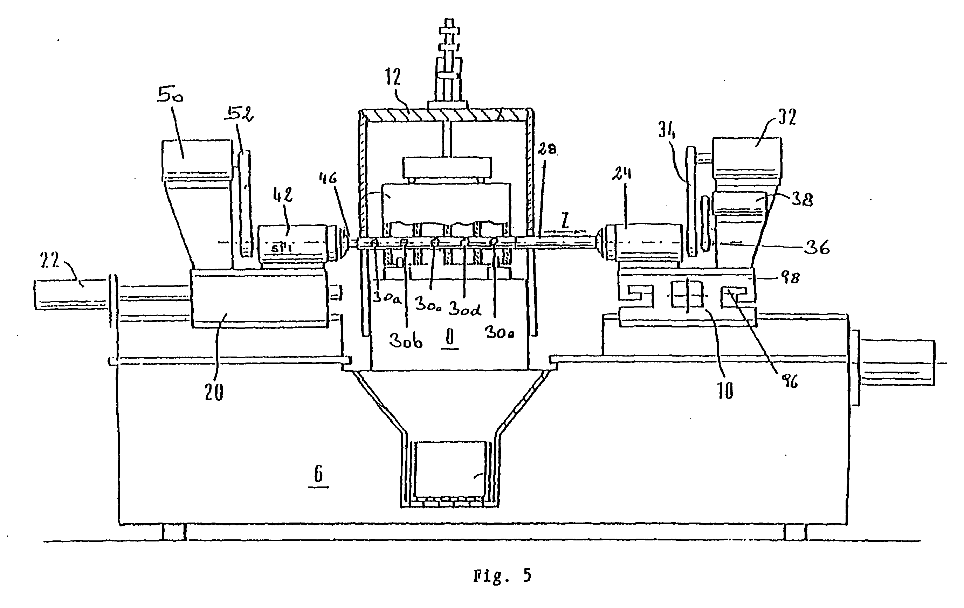

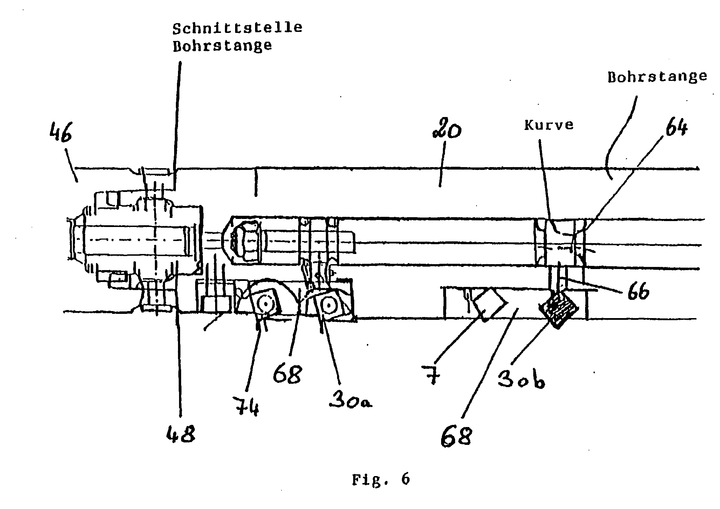

In den Figuren 5 und 6 ist ein drittes Ausführungsbeispiel einer erfindungsgemäßen Werkzeugmaschine 1 (Transfermaschine) hergestellt. Das darin eingesetzte Bohrwerkzeug, mit Gegenhalter 46, Bohrstange 28 und Kupplung 48 hat prinzipiell den gleichen Aufbau wie das vorbeschriebene Ausführungsbeispiel. Das heißt, jedem Steg 4a, 4b .... ist ein eigenes Schneidwerkzeug 30 und gegebenenfalls jeweils wieder eine Vorbearbeitungsschneide 74 zugeordnet. Der Antrieb des Gegenhalters 46 und der Bohrstange 28 erfolgt mittels einer Spindel 42 bzw. einer Hauptspindel 24, die auf zugeordneten Vorschubschlitten 20 bzw. 18 gelagert sind, und über geeignete Spindelantriebe 50, 52 bzw. 32, 34 angetrieben werden. Abgesehen von der Anzahl der Werkzeugschneiden entspricht der Aufbau der vorgenannten Bauelemente im wesentlichen demjenigen des in Figur 1 dargestellten Ausführungsbeispiels, so daß diesbezüglich der Einfachheit halber auf die entsprechende Beschreibung verwiesen wird. Die Zustellung der Schneiden erfolgt über ein Zustellsystem, wie es anhand von Figur 2 erläutert ist. Der Antrieb 38 für die Betätigungswelle 36 des Zustellsystems ist ebenfalls auf dem Hauptspindelvorschubschlitten 18 gelagert.

Der wesentliche Unterschied zwischen dem Ausführungsbeispiel gemäß Figur 1 und dem Ausführungsbeispiel gemäß Figur 5 besteht darin, daß der Hauptspindelvorschubschlitten 18 als Kreuzschlitten ausgeführt ist und eine sich senkrecht zur Zeichenebene in Figur 5 erstreckende Führung 96 hat, auf der ein Querschlitten 98 geführt ist Letzterer trägt die Hauptspindel 24 mit den Antrieben 32, 38. Der Querschlitten 98 kann über einen geeigneten Antriebsmotor in Querrichtung (Senkrechtverzeichenebene) verschoben werden.

Dieser Querschlitten 96 ermöglicht es, die Bohrstange 28 mit einer Vielzahl von Werkzeugschneiden zu versehen und trotzdem herkömmliche Spindeln 24, 42 (ohne Radialverstellung) zu verwenden.

Figur 6 zeigt den kupplungsseitigen Teil des Bohrwerkzeuges mit dem Endabschnitt des Gegenhalters 46, der Spannkupplung 48 und der Bohrstange 20. Diese trägt für jeden Steg 4a, 4b ... ein Schneidwerkzeug 30a, 30b ... denen jeweils ein Vorbearbeitungswerkzeug mit einer Vorbearbeitungsschneide 74 zugeordnet ist.

Die Schneidwerkzeuge 30 sind entsprechend wie beim Ausführungsbeispiel gemäß Figur 2 jeweils in einem Biegeklemmhalter 68 aufgenommen, auf den ein Stift 66 wirkt, der über eine Steuerfläche 64 der Betätigungswelle 36 in Axialrichtung verschiebbar ist. Bei dem gezeigten Ausführungsbeispiel ist die Radialposition der Vorbearbeitungsschnelde 74 nicht einstellbar. Auch bei diesem Ausführungsbeispiel werden sämtliche Schneidwerkzeuge 30 synchron verstellt. Auch hier ließen sich andere Systeme, beispielsweise piezoelektrische Systeme einsetzen, über die eine individuelle Einstellung der Werkzeugschneiden möglich ist.

Zum Einführen der Bohrstange 28 werden die Werkzeugschneiden 30, 74 In eine Horizontalstellung (senkrecht zur Zeichenebene in Figur 5) gebracht und durch Verfahren des Querschlittens 98 in Abhebeposition (außer Mitte) gebracht. Anschließend kann die Bohrstange 28 ohne Kollision der Werkzeugschneiden in die Lagergasse eingeführtwerden, bis die Werkzeugschneide des in Figur 6 vorderen Schneidwerkzeugs 30a vor dem zugeordneten Steg 4a angeordnet ist. Anschließend wird das Bohr- oder Drehmaß durch Ansteuerung des Querschlittens 98 in Bearbeitungsposition gebracht und die Bohrstange 28 über die Kupplung 48 mit dem Gegenhalter 46 verbunden. Nach synchroner Ansteuerung der beiden Spindeln 24, 42 und einem etwa der Breite der Stege 4 entsprechenden Vorschub der Vorschubschlitten 18, 20 befinden sich die Schneiden in der in Figur 5 angedeuteten Position - die Stege 4a... sind fertig bearbeitet. Nach erfolgtem Richten der Bohrstange 28 wird der Gegenhalter 46 von der Bohrstange 28 entkoppelt und nach geringfügiger Verstellung des Querschlittens 28 in Abhebeposition gebracht und aus der Lagergasse heraus gefahren, so daß das nächste Werkstück zuführbar ist.

Die letztgenannten Varianten mit geringer Axiallänge des Bohrwerkzeuges ermöglichen eine sehr biegesteife Konstruktion, wobei ein vorgespanntes, festes System gebildet wird, das eine praktisch spielfreie Führung des Bohrwerkzeuges ermöglicht.

In Abweichung von den vorbeschriebenen Ausführungsbeispielen läßt sich auch der Gegenhalter 46 mit Werkzeugschneiden bestücken, so daß dann die Kupplung etwa in der Mitte (wie beim Ausführungsbeispiel gemäß Figur 1) angeordnet wäre. Bei einer Konstruktion mit Querschlitten 98 müßte dann auch die Spindel 42 zum Antrieb des Gegenhalters 46 auf einem Querschlitten gelagert werden. Selbstverständlich läßt sich auch der Gegenhalter 46 des in Figur 3 dargestellten Bohrwerkzeuges mit Werkzeugschneiden versehen, so daß der Gegenhalter 46 selbst als Bohrstange ausgeführt ist. Durch die letztgenannten Ausführungsbeispiele, bei denen der Gegenhalter 46 und die Bohrstange 28 Schneiden tragen und etwa mit gleicher Axiallänge ausgeführt sind, läßt sich die Taktzeit etwas verringern, da beide Teile gleichzeitig zum Ankoppeln in die Lagergasse eingeführt werden können und somit nur den halben Vorschubweg gegenüber dem in Figur 3 dargestellten Ausführungsbeispiel zurücklegen müssen. Die Betätigungswelle kann in der Bohrstange 28 und/oder im Gegenhalter 46 gelagert sein.

Offenbart ist eine Werkzeugmaschine zum Bearbeiten von Bohrungen mit großer Axiallänge und ein Bohrwerkzeug, das insbesondere für eine derartige Werkzeugmaschine geeignet ist, bei denen eine zumindest eine Werkzeugschneide tragende Bohrstange mittels eines Gegenhalters abgestützt ist, der über eine Kupplung 48 mit der Bohrstange 28 verbunden werden kann. Durch den Gegenhalter wird die radiale Auslenkung der Bohrstange während des Zerspanungsprozesses auf ein Minimum reduziert.

## Patentansprüche

1. Werkzeugmaschine zum Bearbeiten von Ausnehmungen, vorzugsweise von im Abstand zueinander stehenden Bohrungsabschnitten, mit einer von einer Hauptspindel (24, 124) angetriebenen Bohrstange (28), die zumindest ein Schneidwerkzeug (30) trägt und zur Bearbeitung der Bohrungsabschnitte von einer Seite her in die Bohrung einführbar ist und mit einer Hauptspindel-Vorschubeinheit (17, 18) zum Bewegen der Bohrstange (28) in eine Vorschubrichtung (Z), und mit einem Gegenhalter (46), der auf einer Vorschubeinheit (16, 20) gelagert ist, **gekennzeichnet durch** eine Kupplung (48), über die der Gegenhalter (46) mit der Bohrstange (28) drehfest und biegesteif verbindbar ist.

2. Werkzeugmaschine nach Patentanspruch 1, **dadurch gekennzeichnet, daß** der Gegenhalter (46) mittels einer Spindel (42, 146) antreibbar ist.

3. Werkzeugmaschine nach Patentanspruch 1 oder 2, **gekennzeichnet durch** eine Zustelleinrichtung (36, 64, 66), über die jedes oder ein Schneidwerkzeug (30) in Zustellrichtung mit Bezug zur Bohrstangenachse einstellbar ist.

4. Werkzeugmaschine nach einem der vorhergehenden Patentansprüche, **dadurch gekennzeichnet, daß** die Hauptspindel und die Spindel synchron ansteuerbare Exzenterspindeln (124, 126) sind.

5. Werkzeugmaschine nach einem der Patentansprüche 1 bis 3, **dadurch gekennzeichnet, daß** die Hauptspindel (24) und/oder die Spindel (42) auf einer Vorschubeinheit mit Querschlitten (98) gelagert ist.

6. Werkzeugmaschine nach einem der vorhergehenden Patentansprüche 3 bis 5, **dadurch gekennzeichnet, daß** die Zustelleinrichtung eine Betätigungswelle (36) hat, die in der Bohrstange (28) und in der Hauptspindel (24, 124) oder der Spindel (42, 146) geführt und von einem Zustellmotor (38) angetrieben ist und die jeweils einem Schneidwerkzeug (30) zugeordnete Steuerflächen (64) hat, über die das Schneidwerkzeug (30) mittels eines an der Bohrstange (28) gelagerten Übertragungsmechanismus. (66) durch eine Drehzahldifferenz zwischen Betätigungswelle (36) und Spindel (24, 42; 124, 146) in Zustellrichtung verstellbar ist.

7. Werkzeugmaschine nach einem der vorhergehenden Patentansprüche, **dadurch gekennzeichnet, daß** die Kupplungseinrichtung (48) eine Spannkupplung ist.

8. Werkzeugmaschine nach einem der vorhergehenden Patentansprüche, **dadurch gekennzeichnet, daß** jedem Bohrungsabschnitt ein Schneidwerkzeug (30) zugeordnet ist.

9. Bohrwerkzeug, insbesondere für eine Werkzeugmaschine nach einem der vorhergehenden Patentansprüche, mit einer' Bohrstange (28), an der eine Vielzahl von Schneidwerkzeugen (30) ausgebildet ist, und mit einem antreibbaren Gegenhalter (46), **gekennzeichnet durch** eine Kupplungseinrichtung (48), über die der Gegenhalter (46) mit der Bohrstange (28) drehfest und biegesteif gekuppelt ist.

10. Bohrwerkzeug nach Patentanspruch 9, **dadurch gekennzeichnet, daß** der Gegenhalter (46) eine Gegenhalter-Bohrstange mit zumindest einem Schneidwerkzeug hat, die über die Kupplungseinrichtung (48) mit der Bohrstange (28) verbindbar ist.

11. Bohrwerkzeug nach Patentanspruch 10, **dadurch gekennzeichnet, daß** die Bohrstange (28) und die Gegenhalter-Bohrstange etwa die gleichen Axiallängen haben.

## Claims

1. A machine tool for machining recesses, preferably bore sections spaced apart from each other, comprising a boring bar (28) driven by a work spindle (24, 124), the boring bar (28) carrying at least one cutting tool (30) and being adapted to be introduced into the bore from one side for machining the bore sections, and comprising a work spindle feeding unit (17, 18) for moving the boring bar (28) into a feed direction (Z), and comprising a steady (46) which is supported on a feeding unit (16, 20), **characterised by** a coupling (48) by which the steady (46) is connectable to the boring bar (28) in a rotationally fixed and bending-resistant manner.

2. A machine tool according to claim 1, **characterised in that** the steady (46) is adapted to be driven by a spindle (42, 146).

3. A machine tool according to claim 1 or 2, **characterised by** a feed means (36, 64, 66) by which each or one cutting tool (30) is adjustable in the feeding direction with respect to the axis of the boring bar.

4. A machine tool according to any one of the preceding claims, **characterised in that** the work spindle and the spindle are eccentric spindles (124, 126) adapted to be synchronously driven.

5. A machine tool according to any one of claims 1 to 3, **characterised in that** the work spindle (24) and/or the spindle (42) is supported on a feeding unit including a cross slide rest (98).

6. A machine tool according to any one of the preceding claims 3 to 5, **characterised in that** the feed means includes an operating shaft (36) which is guided in the boring bar (28) and in the work spindle (24, 124) or in the spindle (42, 146) and is driven by a feed motor (38) and which has control surfaces (64) which are respectively assigned to a cutting tool (30) and via which the cutting tool (30) is adjustable in the feeding direction by means of a transfer mechanism (66) supported on the boring bar (28) by a difference in speed between the operating shaft (36) and the spindle (24, 42; 124, 146).

7. A machine tool according to any one of the preceding claims, **characterised in that** the coupling means (48) is a chuck coupling.

8. A machine tool according to any one of the preceding claims, **characterised in that** a cutting tool (30) is assigned to each bore section.

9. A boring tool, especially for a machine tool according to any one of the preceding claims, comprising a boring bar (28) on which a plurality of cutting tools (30) are provided and comprising a drivable steady (46), **characterised by** a coupling means (48) via which the steady (46) is coupled to the boring bar (28) in a rotationally fixed and bending-resistant manner.

10. A boring tool according to claim 9, **characterised in that** the steady (46) itself has a boring bar which has at least one cutting tool and which can be connected to the boring bar (28) via the coupling means (48).

11. A boring tool according to claim 10, **characterised in that** the boring bar (28) and the boring bar of the steady have approximately equal axial lengths.

## Revendications

1. Machine-outil pour usiner des cavités, notamment des sections d'alésage qui sont situées à distance les unes des autres, comportant une tige de perçage (28) entraînée par une broche principale (24, 124) et qui porte au moins un outil de coupe (30) et qui peut être introduite dans l'alésage à partir d'un côté pour usiner les sections d'alésage, et comportant une unité (17, 18) d'avance de la broche principale pour déplacer la tige de perçage (28) dans une direction d'avance (Z), et avec un support antagoniste (46), qui est monté sur une unité d'avance (16, 20), **caractérisé par** un accouplement (48), au moyen duquel le support antagoniste (46) peut être relié à la tige de perçage (28) de manière résistante à la torsion et à la flexion.

2. Machine-outil selon la revendication 1, **caractérisée en ce que** le support antagoniste (46) peut être entraînée à l'aide d'une broche (42, 146).

3. Machine-outil selon la revendication 1 ou 2, **caractérisée par** un dispositif d'avance (36, 64, 66), au moyen duquel chaque outil de coupe ou un outil de coupe (30) est réglable dans la direction d'avance par rapport à l'axe de la tige de perçage.

4. Machine outil selon l'une des revendications précédentes, **caractérisée en ce que** la broche principale et la broche sont des broches excentriques (124, 126) pouvant être commandées de façon synchrone.

5. Machine-outil selon l'une des revendications 1 à 3, **caractérisée en ce que** la broche principale (24) et/ou la broche (42) sont montées sur une unité d'avance comportant des chariots transversaux (98).

6. Machine-outil selon l'une des revendications précédentes 3 à 5, **caractérisée en ce que** le dispositif d'avance comporte un arbre d'actionnement (36), qui est guidé dans la tige de perçage (28) et dans la broche principale (24, 124) ou la broche (42, 146), est entraîné par un moteur d'avance (38) et qui possède des surfaces de commande (64), qui sont associées respectivement à un outil de coupe (30) et au moyen desquelles l'outil de coupe (30) peut être déplacé dans la direction d'avance, à l'aide d'un mécanisme de transmission (66) monté sur la tige de perçage (28), sous l'effet d'une différence entre les vitesses de rotation de l'arbre d'actionnement (36) et de la broche (24, 42; 124, 146).

7. Machine-outil selon l'une des revendications précédentes, **caractérisée en ce que** le dispositif d'accouplement (48) est un accouplement de serrage.

8. Machine-outil selon l'une des revendications précédentes, **caractérisée en ce qu'**un outil de coupe (30) est associée à chaque section d'alésage.

9. Outil de perçage, notamment pour une machine-outil selon l'une des revendications précédentes, comportant une tige de perçage (28), sur laquelle sont formées une multiplicité d'outils de coupe (30), et avec un support antagoniste (46), **caractérisé par** un dispositif d'accouplement (48) par lequel le support antagoniste (46) est couplé à la tige de perçage (28) de manière résistante à la torsion et à la flexion.

10. Outil de perçage selon la revendication 9, **caractérisé en ce que** le support antagoniste (46) possède une tige de perçage comportant au moins un outil de coupe, qui peut être relié à la tige de perçage (28) par l'intermédiaire du dispositif d'accouplement (48).

11. Outil de perçage selon la revendication 10, **caractérisé en ce que** la tige de perçage (28) et la tige de perçage du support antagoniste possèdent approximativement les mêmes longueurs axiales.
